# EUROPEAN PATENT APPLICATION

(11) **EP 4 736 616 A1**
(43) Date of publication of application: **06.05.2026**
(21) Application number: 25211268.5
(22) Date of filing: 27.10.2025
(51) Int. Cl.: A01C 7/08, A01C 15/00

(54) **AGRICULTURAL EQUIPMENT FOR SOIL SEEDING**

(30) Priority: 05.11.2024 IT 202400024756
(71) Applicant: Torrico S.r.l., 36053 Gambellara (VI) (IT)
(72) Inventor: ZAMBON, Matteo, 36053 GAMBELLARA (VI) (IT)
(74) Representative: Burchielli, Riccardo

(57) **Abstract**

Agricultural equipment (100), in particular a pressurised seed drill, comprising a hopper (1) equipped with at least two first compartments (11, 12), a dosing system (5) and an additional kit (2) configured to connect to said dosing system (5) and create, inside said hopper (1), a second compartment (14) in addition to said at least two first compartments (11, 12) of said hopper (1).

## Description

The present invention relates to an agricultural equipment for soil seeding.

### Field of the invention

The invention is in the technical field of agricultural equipment and apparatus, in particular in the technical field of pressurised seed drills.

### Prior art

In the agricultural field, there are numerous types of agricultural equipment that are used according to the requirements, needs and purposes for which they are intended.

A particular type of agricultural equipment comprises all those devices that perform the function of a seed drill.

Over the years, numerous types of seed drills have appeared on the market in order to meet the needs of the sector and users.

Traditional seed drills used in agriculture for seed distribution are designed to ensure precise and uniform distribution of seeds and/or fertiliser on the ground.

Among these, pressurised seed drills have proven effective in improving sowing precision and speed, while reducing product waste.

The general principle of functioning of a pressurised seed drill involves a system consisting of a fan that generates an air flow in the main line and in the pressure induction pipe that communicates with the hopper. When the pressure in the main line and the hopper is equal, the dosed material flows freely from the storage hopper to the main transport line.

Subsequently, the dosed material (seeds and/or fertiliser) reaches the dosing systems and is spread on the ground.

In particular, in pressurised seed drills, a system of pipes connects the hopper environment with the pipes or hoses, where the metering system pours the seeds, so that the two environments are isobaric.

Preferably, the connecting pipe between the two environments is inserted into the metering device of the agricultural equipment closest to the fan.

Pressurised hoppers are currently available on the market, which are particularly suitable for this type of seed drill, equipped with a single compartment or, in some cases, with two, three or four compartments.

However, the number of compartments inside the hoppers remains fixed and cannot be changed by the user who has purchased the agricultural equipment.

To overcome this limitation, a number of solutions have been adopted that involve the addition of an external tank to create an extra compartment to add to those inside the hopper.

However, these solutions have the following disadvantages:
- the additional external tank is mounted outside the hopper and increases its overall size;
- the additional external tank requires dedicated and complex motor and electronics management, which increases overall complexity and costs;
- the additional external tank causes a shift in the centre of gravity of the base equipment.

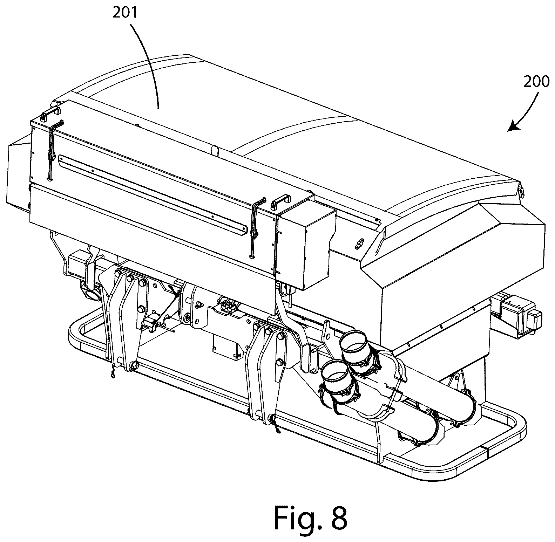

An example of this solution can be seen in figure 8 and is indicated by the reference number 200.

In said figure, an additional tank 201 can be seen, which must be mounted externally to the agricultural equipment and requires dedicated electronic and pneumatic instrumentation.

The relevant prior art also comprises patent applications US5592889A, DE102016121559A1, GB2346308A, US2004/026544A1 and DE102009025761A, which generally describe solutions having three native internal compartments with associated dosing devices.

### Aim of the invention

The aim of the present invention is therefore to provide agricultural equipment for soil seeding that is capable of resolving the aforementioned drawbacks and critical issues.

Another aim of the present invention is to create agricultural equipment for soil seeding that improves on similar agricultural equipment currently available on the market.

A further aim of the present invention is to provide agricultural equipment for soil seeding, such as a pressurised seed drill, that can contain and sow more than two products.

Another aim of the present invention is to create agricultural equipment for soil seeding that can be integrated with existing agricultural equipment, such as pressurised seeders.

A further aim of the present invention is to provide agricultural equipment for soil seeding, such as a pressurised seeder, that does not require external tanks.

Another aim of the present invention is to provide agricultural equipment for soil seeding, such as a pressurised seed drill, which has a hopper capable of holding three different products.

These and other aims are achieved by agricultural equipment for soil seeding according to the attached independent claim.

Further detailed technical features are set out in the attached dependent claims.

### Brief description of the figures

The present invention will now be described, by way of example but not limitation, according to some of its preferred embodiments, and with the aid of the attached figures, in which:
- figure 1 is a perspective view of the agricultural equipment for soil seeding according to the invention;
- figures 2A and 2B are two perspective views of a section of the agricultural equipment for soil seeding according to the invention, in two different embodiments;
- figures 3A and 3B show the agricultural equipment illustrated in figures 2A and 2B containing a first and a second product;
- figure 4 is a further perspective view of the agricultural equipment for soil seeding according to the invention, without the top lid;
- figure 5 illustrates the additional kit for the third product that can be installed on agricultural equipment for soil seeding;
- figures 6A, 6B and 6C illustrate different possibilities for using the agricultural equipment for soil seeding according to the invention;
- figures 7A, 7B and 7C illustrate further possibilities for using the agricultural equipment for soil seeding according to the invention;
- figure 8 is a perspective view of agricultural equipment for soil seeding, according to the prior art.

### Detailed description

With reference to the figures mentioned, a preferred embodiment of an agricultural equipment for soil seeding according to the invention is shown.

With reference to the figures above, the invention refers to a soil seeding equipment, in particular a pressurised soil seeding equipment, indicated with reference number 100.

Advantageously, the agricultural equipment for soil seeding that is the object of the invention is capable of spreading seeds, fertilisers and other products. In the following discussion, this possibility should be understood as meaning that the agricultural equipment can also contain and spread other products in addition to seeds.

In its first embodiment, according to the present invention, the agricultural equipment 100 comprises a hopper 1 and a dosing system 5.

The hopper 1 is equipped with one or more compartments designed to contain a particular type of product.

For example, hopper 1 can be equipped with two compartments for containing two different types of seeds or for containing a seed and a fertiliser.

Advantageously, different combinations can be chosen depending on the needs and requirements of users.

In a preferred embodiment according to the present invention, hopper 1 is equipped with two compartments.

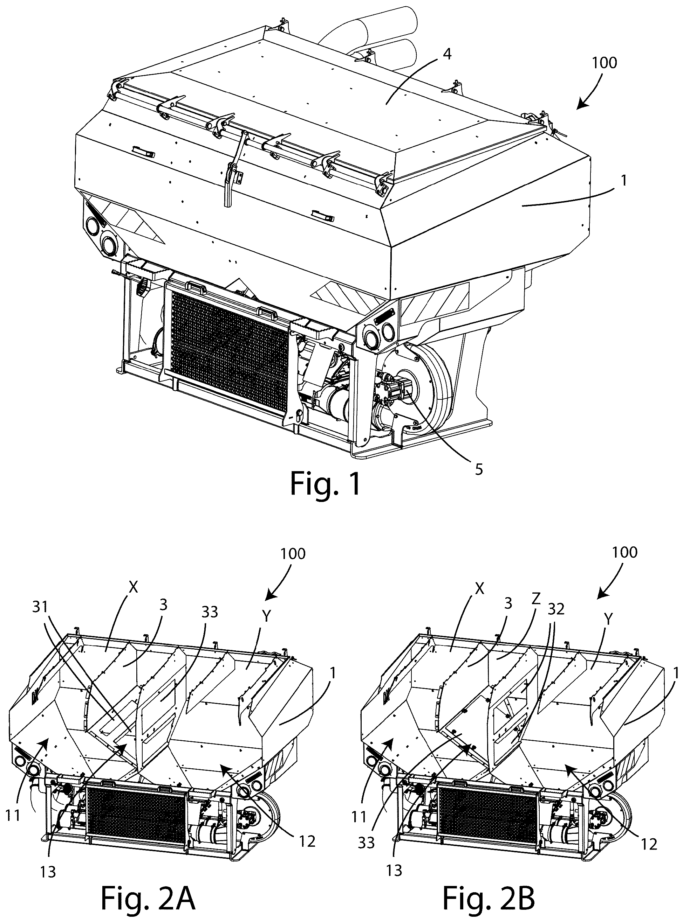

The agricultural equipment also has a lid 4 for the hopper 1 (figure 1). Preferably, the lid 4 is airtight.

The lid 4 can be opened to allow products to enter the hopper 1.

Figures 2A and 2B show sections of two different embodiments of an agricultural apparatus for soil seeding.

With reference to figures 2A and 2B, three compartments 11, 12 and 13 of the hopper 1 are visible.

Inside compartments 11, 12 and 13, there are three respective volumes indicated by the letters X, Y and Z.

Compartments 11, 12 and 13 are delimited by the side walls of hopper 1 and by the walls of a frame 3.

Frame 3 is located inside hopper 1.

With reference to figures 2A and 2B, the walls of frame 3 define compartment 13 inside it.

More specifically, with reference to figures 2A and 2B, it can be seen that:
- the first compartment 11 is bounded on three sides by the side walls of hopper 1 and on one side by a first wall of frame 3;
- the second compartment 12 is bounded on three sides by the side walls of the hopper 1 and on one side by a second wall of the frame 3;
- the third compartment 13 is bounded by the walls of the frame 3 located inside the hopper 1.

Frame 3 is fixed inside hopper 1 and can take on different shapes and sizes depending on the different designs.

Advantageously, the walls of frame 3 that divide compartment 13 from compartments 11 and 12 have openings 31 that allow compartment 13 to communicate with compartment 11 and openings 32 that allow compartment 13 to communicate with compartment 12.

The openings 31 and 32 of frame 3 allow the product contained within compartment 13 to access compartment 11 or compartment 12.

Another advantage is that frame 3 is equipped with a bulkhead 33 that allows the openings 31 or 32 in the walls of frame 3 to be closed in order to direct the product contained in compartment 13 to compartment 11 or compartment 12.

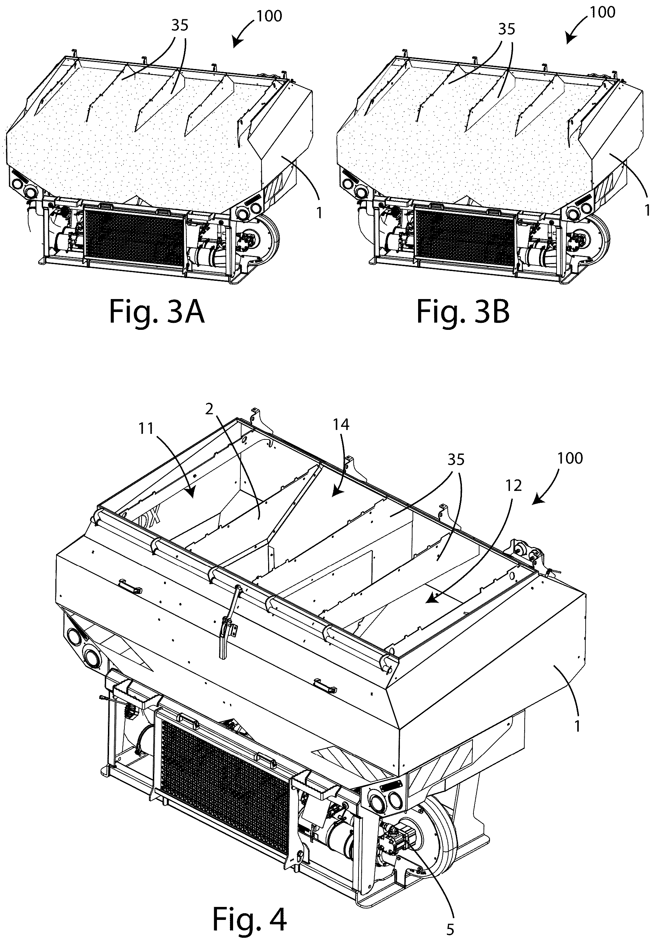

The bulkhead 33 is configured to close the openings 31, 32 of the walls of the frame 13 so as to fill the compartments of the hopper as illustrated in figures 3A and 3B.

With reference to the embodiment shown in figures 2A and 2B, bulkhead 33 can be positioned vertically so as to close openings 32 that allow communication between compartment 13 and compartment 12, or at an angle so as to close openings 31 that allow communication between compartment 13 and compartment 11.

In particular, if the bulkhead 33 is positioned vertically so as to close the openings 32 that allow communication between compartment 13 and compartment 12, the configuration shown in figure 3A is obtained.

If the bulkhead 33 is positioned obliquely so as to close the openings 31 that allow communication between compartment 13 and compartment 11, the configuration shown in figure 3B is obtained.

With reference to figures 2A and 3A, compartments 11 and 13 are communicating.

In particular, in this embodiment, openings 31 allow communication between compartment 13 and compartment 11, while openings 32 are closed by bulkhead 33.

In this embodiment, corresponding to figure 3A, a first product can occupy 50% of the total volume of the hopper (volume X + Z) and a second product can occupy the remaining 50% of the total volume of the hopper (volume X).

In other words, as shown in figure 3A, compartments 11 and 13 are filled with a first product and compartment 12 is filled with a second product.

With reference to figures 2B and 3B, compartments 12 and 13 are connected.

In particular, in this embodiment, openings 32 allow communication between compartment 13 and compartment 12, while openings 31 are closed by bulkhead 33.

In this embodiment, corresponding to figure 3B, a first product can occupy 66% of the total volume of hopper 1 (volume Y + Z) and a second product can occupy the remaining 33% of the total volume of hopper 1 (volume X).

In other words, as shown in figure 3B, compartment 11 is filled with a first product and compartments 12 and 13 are filled with a second product.

Further embodiments and combinations can be obtained by varying the position of frame 3 inside hopper 1.

The presence of frame 3 makes it possible to obtain agricultural equipment 100 having a hopper 1 equipped with three compartments but only two dosing devices.

Advantageously, multiple frames 3 can also be inserted inside hopper 1.

Advantageously, frame 3 can be fixed to a plurality of ribs 35 located at the upper opening of hopper 1.

Ribs 35 connect two opposite walls, for example those of greater extension, of hopper 1.

With reference to figure 4, an agricultural equipment 100 comprising an additional kit 2 can be seen.

The additional kit 2 allows an additional compartment 14 to be created inside the hopper 1.

With reference to figure 4, two compartments 11 and 12 of the hopper and an additional compartment 14 can be seen.

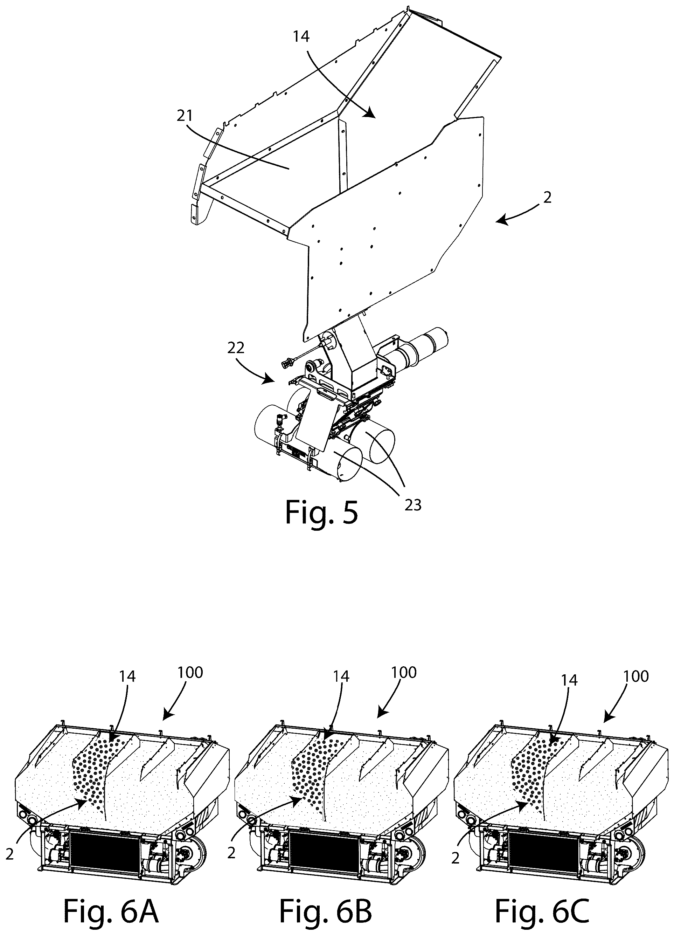

Advantageously, the additional kit 2, as shown in figure 5, comprises a tank 21, inside which the compartment 14 is defined, and an additional dosing system 22 that connects to the dosing system 5 of the agricultural equipment.

The tank 21 is configured to fit inside the hopper 1 of the agricultural equipment.

Advantageously, the additional dosing system 22 can be integrated directly into the components of the base equipment on which the additional kit 2 is installed.

In particular, the additional dosing system 22 of the additional kit 2 comprises sleeves 23 configured to connect to the dosing system 5 of the agricultural equipment on which the additional kit 2 is to be installed.

The number of sleeves 23 in the additional kit 2 may vary depending on the agricultural equipment on which it is to be installed.

Preferably, there are one or two sleeves 23 depending on whether the dosing system of the agricultural equipment comprises one or two pipes.

Advantageously, the connection of the sleeves 23 to the agricultural equipment is one of the connecting elements between the latter and additional kit 2.

A further connection between additional kit 2 and the agricultural equipment is provided by the fixing of the tank 21 of additional kit 2 inside the hopper 1 of the agricultural equipment.

In fact, according to the invention, it is possible to add the additional kit 2 to a basic agricultural device without the need for special instrumentation and special electrical and motor management.

With reference to figure 4, an agricultural equipment 100 can be seen, made using a basic agricultural device, in particular a pressurised seed drill, integrated with an additional kit 2.

Another advantage is that the additional dosing system 22 integrates directly with the pipes of the dosing system 5 of the basic equipment.

In particular, the additional dosing system 22 comprises one or more sleeves configured to connect to the respective pipes of the basic equipment.

This allows for the creation of an additional compartment 14, corresponding to the tank 21, which is pressurised without the need for additional instrumentation, as is the case in the prior art and can be seen in figure 8.

The additional kit 2 can in fact be pressurised thanks to the pressurisation system already present in the basic agricultural equipment on which it is installed.

In particular, since tank 21 is located inside hopper 1 closed by lid 4, specifically an airtight lid, additional kit 2 can use the pressurisation system present in the agricultural equipment on which kit 2 is to be installed.

Consequently, since the additional kit 2 is inserted inside the hopper 1, which is at the same pressure as the distribution pipe(s) of the dosing system, it is also automatically at the same pressure. In particular, for this purpose, there may be an additional equalisation pipe which can advantageously connect the dosing system 5, preferably downstream of the fan, and the hopper 1, preferably above the maximum product loading height level.

Opportunely, additional kit 2 is configured to be able to exploit all the components of the base equipment on which it is installed (fan, pipes and electronics).
In fact, all the components necessary for pressurising the agricultural equipment, such as the fan, can be used by additional kit 2, which is connected to the components of the agricultural equipment on which it is installed.

In contrast to the prior art (figure 8), since it is completely integrated into the agricultural equipment, it is not necessary for additional kit 2 to comprise dedicated instrumentation, such as, following the previous example, a fan or additional electronic circuits.

Furthermore, since additional kit 2 is located inside the pressurised hopper 1, it is also pressurised, unlike the prior art devices, which require independent pressurisation.

In fact, none of the prior art documents suggest the possibility of inserting an additional kit inside the hopper capable of creating an additional integrated compartment, using the same pressurisation and dosing systems as the base equipment. On the contrary, known solutions that allow for the management of an additional product involve the addition of external tanks, with the well-known disadvantages of bulkiness, electronic complexity and displacement of the centre of gravity.

In addition, this feature allows the use of the lid 4 of the hopper 1 without having to provide additional lids.

With reference to figures 6A, 6B and 6C, three different possible combinations of products to be dosed are shown.

In particular, in these figures, hopper 1 always has three compartments and the combinations illustrated provide for:
- compartment 11 and compartment 12 filled with a first product while the additional compartment 14 is filled with a second product (figure 6A);
- compartment 11, compartment 12 and additional compartment 14 filled with a first product, a second product and a third product, respectively (figure 6B);
- compartment 11 empty while compartment 12 and additional compartment 14 filled with two different products (figure 6C).

In other words, in the embodiments illustrated in the figures, the agricultural equipment 100 comprises a base equipment or equipment on which an additional kit 2 is installed.

It is understood that the number of compartments described above is only indicative and illustrative of the embodiments illustrated in the figures and that this number may vary depending on the different agricultural equipments.

The additional kit 2 allows an additional compartment 14 to be created inside the hopper 1 in which to place a product that needs to be dispensed/sown.

In this way, again with reference to figures 6A, 6B and 6C, an agricultural device is obtained with three compartments and three dosing devices (two compartments of the basic device plus one compartment of the additional kit), respectively for three products (different or even repeated).

Advantageously, the additional kit 2 features a dedicated dosing devices for its operation.

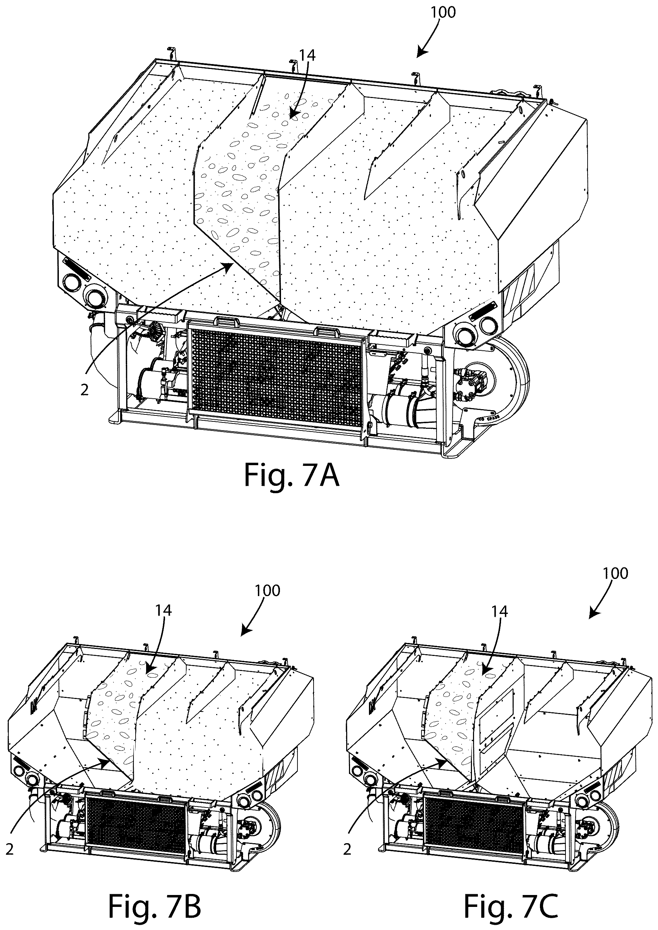

With reference to figures 7A, 7B and 7C, further possibilities for using agricultural equipment equipped with an additional kit 2 can be seen.

In particular:
- in figure 7A, compartments 11 and 12 are filled with a first product and the additional compartment 14 is filled with a second product;
- in figure 7B, compartment 11 is empty, compartment 12 is filled with a first product and the additional compartment 14 is filled with a second product;
- in Figure 7B, compartments 11 and 12 are empty and the additional compartment 14 is filled with a product.

In particular embodiments, the tank 21 may be connected to the hopper 1 and/or to the ribs 35.

Advantageously, with the addition of the additional kit, it is possible to increase the types of use of the agricultural equipment, for example, two or three different seeds/fertilisers can be used (even with empty compartments), combinations of seeds and fertilisers, etc. The user can therefore have a solution that allows them to meet different needs without changing agricultural equipment, saving time and costs.

Advantageously, the object of the invention can be used with agricultural equipment equipped with one or two distribution heads, even of different types, such as central or dual-tube distribution heads.

This aspect allows for greater flexibility and makes it possible to use the agricultural equipment in many ways depending on the user's needs.

The description provided clearly illustrates the characteristics of the agricultural equipment for soil seeding, which is the subject of the invention, as well as its advantages.

Finally, it is clear that numerous other variations can be made to the equipment in question without departing from the principles of novelty inherent in the inventive idea, just as it is clear that, in the practical implementation of the invention, the materials, shapes and dimensions of the details illustrated may be any depending on requirements and may be replaced with equivalent ones.

Where the features and techniques mentioned in any claim are followed by reference signs, such reference signs have been included for the sole purpose of increasing the intelligibility of the claims and, consequently, such reference signs have no limiting effect on the interpretation of each element identified by way of example by such reference signs.

## Claims

1. Agricultural equipment (100), in particular a pressurised seed drill, comprising:
- a hopper (1) equipped with at least two first compartments (11, 12),
- a dosing system (5);
said agricultural equipment (100) being **characterised**
**by** comprising
at least one additional kit (2), configured to create a second compartment (14) in said hopper (1), comprising a tank (21) configured to be inserted inside said hopper (1) and to delimit therein said second compartment (14) in addition to said at least two first compartments (11, 12) of said hopper (1), and
an additional dosing system (22) configured to be connected to said dosing system (5).

2. Agricultural equipment (100) according to claim 1, **characterised in that** said additional dosing system (22) comprises one or more sleeves (23) configured to connect to pipes of said dosing system (5).

3. Agricultural equipment (100) according to claim 1, **characterised in that** said additional kit (2) is configured to integrate with a pressurisation system of said agricultural equipment (100).

4. Agricultural equipment (100) according to one or more of the preceding claims, **characterised in** comprising a airtight lid (4) for pressurised closure of said hopper (1).

5. Agricultural equipment (100) according to one or more of the preceding claims, **characterised in** comprising one or more distribution heads.

6. Additional kit (2) configured to be integrated into an agricultural equipment (100) equipped with a hopper (1) and a dosing system (5) according to one or more of the preceding claims, **characterised in that** it comprises
- a tank (21) configured to be inserted inside said hopper (1) and to define a second compartment (14) inside a hopper (1) of said agricultural equipment (100) equipped with at least two first compartments (11, 12),
- an additional dosing system (22) configured to connect with said dosing system (5) of said agricultural equipment (100).

7. Additional kit (2) according to claim 6, **characterised in that** said additional dosing system (22) comprises one or more sleeves for connection to said dosing system (5).

8. Additional kit (2) according to claim 6, **characterised in** comprising a dedicated dosing device.

9. Additional kit (2) according to claim 6, **characterised in** comprising an additional equalisation pipe connecting the dosing system (5), preferably downstream of the fan, and the hopper (1), preferably above the maximum product loading height level.
